(19) **Europäisches Patentamt / European Patent Office / Office européen des brevets**

(11) **EP 2 400 740 B1**

(12) **EUROPEAN PATENT SPECIFICATION**

(45) Date of publication and mention
of the grant of the patent:
**12.08.2015 Bulletin 2015/33**

(51) Int Cl.:
*H04N 5/14* (2006.01)    *G06T 7/20* (2006.01)
*H04N 7/01* (2006.01)

(21) Application number: **11168349.6**

(22) Date of filing: **01.06.2011**

(54) **Method for estimating motion vectors for frame interpolation**

Verfahren zur Schätzung von Bewegungsvektoren zur Bildinterpolation

Procédé d'estimation des vecteurs de mouvement pour interpolation de trame

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2010 TR 201005076**

(43) Date of publication of application:
**28.12.2011 Bulletin 2011/52**

(73) Proprietor: **Vestel Elektronik Sanayi ve Ticaret A.S.
45030 Manisa (TR)**

(72) Inventors:
 • **GUNYEL, Bertan
  45030 Manisa (TR)**
 • **ALATAN, Abdullah Aydin
  45030 Manisa (TR)**

(74) Representative: **Cayli, Hülya
 Paragon Consultancy Inc.
 Koza Sokak No: 63/2
 GOP
 06540 Ankara (TR)**

(56) References cited:
 • **Ai-Mei Huang: "Motion vector processing in compressed video and its applications to motion compensated frame interpolation", , 1 January 2009 (2009-01-01), XP55038475, Retrieved from the Internet: URL:http://escholarship.org/uc/item/7fr9x7 cx [retrieved on 2012-09-18]**

 • **SHEN-CHUAN TAI ET AL: "A Multi-Pass True Motion Estimation Scheme With Motion Vector Propagation for Frame Rate Up-Conversion Applications", JOURNAL OF DISPLAY TECHNOLOGY, IEEE SERVICE CENTER, NEW YORK, NY, US, vol. 4, no. 2, 1 June 2008 (2008-06-01), pages 188-197, XP011334388, ISSN: 1551-319X, DOI: 10.1109/JDT.2007.916014**
 • **SUK-JU KANG ET AL: "Design and implementation of median filter based adaptive motion vector smoothing for motion compensated frame rate up-conversion", CONSUMER ELECTRONICS, 2009. ISCE '09. IEEE 13TH INTERNATIONAL SYMPOSIUM ON, IEEE, PISCATAWAY, NJ, USA, 25 May 2009 (2009-05-25), pages 745-748, XP031484540, ISBN: 978-1-4244-2975-2**
 • **BERTAN GÜNEL ET AL: "Multi-resolution motion estimation for motion compensated frame interpolation", IMAGE PROCESSING (ICIP), 2010 17TH IEEE INTERNATIONAL CONFERENCE ON, 29 September 2010 (2010-09-29), pages 2793-2796, XP55038339, Hong Kong**
 • **DANTE A ET AL: "Precise real-time outlier removal from motion vector fields for 3D .reconstruction", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE, IEEE PISCATAWAY, NJ, USA, vol. 1, 14 September 2003 (2003-09-14), pages 393-396, XP010669761, ISBN: 978-0-7803-7750-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- DANE G ET AL: "Motion vector processing for frame rate up conversion", ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 3, 17 May 2004 (2004-05-17), pages 309-312, XP010718188, DOI: 10.1109/ICASSP. 2004.1326543 ISBN: 978-0-7803-8484-2
- FUJIWARA S ET AL: "Motion-Compensated Frame Rate Up-Conversion Based on Block Matching Algorithm with Multi-Size Blocks", INTELLIGENT SIGNAL PROCESSING AND COMMUNICATION SYSTEMS, 2005. ISPACS 2005. PROCEEDINGS OF 2005 INTERNATIONAL SYMPOSIUM ON HONG KONG 13-16 DEC. 2005, PISCATAWAY, NJ, USA,IEEE, 13 December 2005 (2005-12-13), pages 353-356, XP010894609, ISBN: 978-0-7803-9266-3
- Allark J W Mertens: "A block-based motion estimator capable of handling occlusions", , 30 November 2000 (2000-11-30), XP055132406, IAPR Workshop on Machine Vision Applications Retrieved from the Internet: URL:http: //b2.cvl.iis.u-tokyo.ac.jp/mva/pr oceedings/ CommemorativeDVD/2000/papers/200 0529.pdf [retrieved on 2014-07-30]

**Description**

**Technical Field**

The present invention relates to a method and device for estimating motion vectors for frame interpolation.

**Prior Art**

A video is made up of plural frames, each frame being a still image, the effect of showing consecutive frames being to give the impression of movement. The frame rate of videos is generally sufficiently high such that a viewer cannot perceive the individual frames but rather perceives a continuous moving image.

On some television displays it is desirable to increase the frame rate from that at which the video being displayed was originally captured. This can be due to increased frame rate requirement for display in accordance with a different standard from that at which the video was captured.

In addition, many of the latest high-performance television sets, particularly large screen and wide screen (16:9 format) versions, use a 100Hz screen refresh rate instead of the conventional 50Hz refresh rate. This is primarily to avoid screen flicker and motion blur, which becomes more perceptible and annoying to the viewer as the screen size increases. However, television broadcast transmissions may only contain 50 frames per second. Hence, the frame rate of the transmitted content should be adjusted for, for example, the new LCD televisions which have refresh rates of 100Hz, 120Hz or 200Hz. The increase in the frame rate is called frame rate up conversion.

For frame rate up conversion, new frames are inserted between existing frames of the video content. Three straightforward approaches for frame rate up conversion are referred to as "black frame insertion", "frame repetition" and "frame averaging". Whilst these techniques are computationally relatively simple, they can degrade visual performance. For example, black frame insertion reduces the average intensity of the video content, whereas frame repetition and frame averaging cause "motion judder" and "motion blur". Motion compensated frame interpolation is the preferred solution for interpolation to avoid the motion blur, which is caused by the motion persisting function of the human visual system, the long response time of the crystal cells and the hold-type characteristic of panel displays.

Motion estimation is a vital step for extracting the motion information between successive image frames. Motion estimation algorithms can be divided into two categories, referred to as pel-recursive and blockwise algorithms. The pel-recursive schemes estimate motion for each pixel in image frames, whereas blockwise schemes divide the image frames into blocks of pixels and assume that all the pixels in a block obey the same motion. Blockwise schemes are widely used because of their satisfactory performance and computational advantages.

Blockwise motion estimation algorithms can be further divided into two sub-groups, namely conventional "search-type" methods and "predict-and-update" type algorithms. Among all the conventional search-type motion estimation algorithms, the best performance is obtained by the full-search algorithm. The general aim in such motion estimation methods is to reduce the computational complexity, whilst keeping the performance degradation at a minimum.

Search based techniques are more common than prediction based techniques, but are not suitable for the purposes of the invention as described herein. Since search based techniques aim to find motion vectors by minimizing an error metric, the estimated motion vectors may not represent the "true" 2D motion between successive frames of video. However, the estimation of true 2D motion vectors is needed for motion compensated frame interpolation.

Block size can have a contradictory impact on motion estimation performance. Larger block size is advantageous in finding more stable motion vectors since blocks with a larger size have more texture information. On the other hand, smaller block size is better in representing the motion characteristics around moving object boundaries. Thus, it is difficult to find the optimal block size. An appropriate solution is starting the motion estimation using blocks of pixels with large sizes and to gradually decrease the block size.

In the published article Ai - Mei Huang: "Motion vector processing in compressed video and its applications to motion compensated frame interpolation" 1 January 2009 page 1-46, a method to improve image quality for motion compensated frame interpolation or frame rate up-conversion is disclosed. In the first step of the method, it is determined that if the motion vectors in the received bitstream are reliable. This determination is performed by calculating the residual energy of the blocks which have the motion vectors and comparing the calculated values with a predetermined value. Then, blocks comprising unreliable motion vectors and next to each other are merged. After merging, best motion vector is assigned to a macro-block by selecting from a candidate set and minimizing the averaged absolute bidirectional prediction difference between the forward and backward predictions. Then, assigned motion vectors are reclassified based on bidirectional prediction difference since there may still be smaller areas inside the macroblocks where assigned motion vectors cannot represent their motion well. As the macro-block consists of multiple motions, some regions may have different motion. For that reason, these unsuitable motion vectors can then be identified and reclassified. Then, smoothing of the assigned motion vectors is performed in order to avoid serious ghost artifact caused by improper motion. At the end frame interpolation is performed.

In S.C. Tai, Y.R. Chen, Z.B. Huang, C.C. Wang, "A Multi-Pass True Motion Estimation Scheme with Motion Vector Propagation for Frame Rate Up Conversion Applications", IEEE Journal of Display Technol., vol. 4, no. 2, pp. 188-197, June 2008, a multi-pass motion estimation algorithm with variable block size is proposed. The algorithm processes the blocks of a frame a number of times starting with a large block size and decimating the block size in successive passes. At the end of each pass, the best match of the motion vectors to those of neighbouring blocks are chosen until there is confidence in the motion estimation

In Ai-Mei Huang: "Motion vector processing in compressed video and its applications to motion compensated frame interpolation", 1 January 2009, XP55038475 frame interpolation is implemented by hierachically refining motion vectors on different block sizes.

In another published article SUK-JU KANG ET AL: "Design and implementation of median filter based adaptive motion vector smoothing for motion compensated frame rate up-conversion" CONSUMER ELECTRONICS, 2009. ISCE '09. IEEE 13th International Symposium On, IEEE, Piscataway, NJ, USA, 25 May 2009, pages 745-748, it is mentioned that, in the motion compensated frame rate up-conversion which consists of motion estimation and motion compensated interpolation, among the motion vectors, some incorrect motion vectors can exist and if these incorrect motion vectors are used for constructing interpolated frame, block artifacts occur in the frame and the image quality of the frame decreases greatly. For that reason, in said document, a method for smoothing motion vectors in order to eliminate mentioned problems is developed. In the method, the outliers are detected and corrected in a motion vector field by considering the neighbouring motion vectors surrounding the current motion vector. The mentioned smoothing method is based on the median filter for motion compensated frame rate up-conversion. Specifically, in the outlier detection, the spatial correlation between the current motion vector and its neighbouring motion vectors is calculated. If the current motion vector is not correlated with its neighbouring motion vectors, it is decided that the current motion vector is an outlier and, that motion vector is corrected into a new motion vector generated by the median filter.

## Brief Description of the Invention

The present invention seeks to provide an improved method of estimating motion vectors.

In accordance with the present invention there is provided a multi-pass method of estimating motion vectors for the interpolation of a video frame, the method comprising performing a predictive search to assign motion vectors to blocks of pixels of the video frame, detecting outlier motion vectors amongst the assigned motion vectors, correcting the outlier motion vectors, and repeating the predictive search, detecting and correcting steps in second and subsequent passes to prevent error accumulation in the assigned motion vectors.

In an embodiment, the video frame to be interpolated may be located temporally between first and second frames of a sequence of video frames.

Additionally, and/or alternatively, the interpolated video frame may be a reconstruction or synthesis of a frame which was skipped, missed and/or damaged in some manner.

Embodiments of the present invention estimate the blockwise motion vector field between a first frame ($F(t)$) and a second frame ($F(t+T)$) of a sequence of video frames.

The method preferably uses multi-resolution processing. For example, the frame resolutions and block sizes may be adapted for every pass.

In an embodiment, a motion vector is assigned to each block of pixels by the predictive search step. The outlier motion vectors in the generated motion vector field are then detected and corrected at the end of each pass. As the method detects and then corrects outlier motion vectors during each pass, error accumulation is prevented.

In a preferred embodiment, the method further comprises selecting the assigned motion vector which most nearly matches a candidate set.

Preferably, the selected assigned motion vector provides a minimum pixelwise matching error from the candidate set.

For example, the candidate set is formed by applying an update vector set to a predictive motion vector.

A motion vector is defined as inlier if it has both good match error properties and spatial consistency with the neighbours. Hence, if at least one of these two conditions fails, the corresponding motion vector is regarded as outlier.

So, in an embodiment, the step of detecting outlier motion vectors comprises detecting as outlier motion vectors, motion vectors which have a pixelwise match error above a predetermined threshold; and/or detecting as outlier motion vectors, motion vectors having insufficient consistency with the motion vectors of neighbouring blocks.

Two vectors are regarded as similar, if the absolute differences between the x and y components are, separately, below a predetermined threshold.

In an embodiment, the step of correcting outlier motion vectors comprises selecting the motion vector from a candidate set which minimizes the cost function.

For example, the candidate set for motion vector correction is composed of the inlier motion vectors in neighbouring blocks.

In a method of the invention the cost function comprises the pixelwise match error when the candidate motion vector is applied to the particular block of pixels; total deviation of the candidate motion vector from the other motion vectors in the candidate set; the absolute difference of the mean intensity values of the particular block of pixels and the block of pixels hosting the candidate motion vector; and the ratio of the number of blocks having outlier motion vectors in the neighbourhood of the block hosting the candidate motion vector, and the total number of blocks in the neighbourhood of the block hosting the candidate motion vector.

Preferably, and as set out above, the method uses multi-resolution processing wherein the second and subsequent passes repeating the predictive search, detecting and correcting steps are undertaken with blocks whose sizes have been adjusted.

For example, the effective block size may be decreased during the second and subsequent passes utilising a down-sampling factor.

The invention also extends to a device for estimating motion vectors for the interpolation of a video frame, the device comprising means for performing a predictive search to assign motion vectors to blocks of pixels of the video frame, means for receiving the assigned motion vectors from the predictive search performing means and for detecting outlier motion vectors amongst the assigned motion vectors, means for receiving and correcting the outlier motion vectors, and means for applying the assigned motion vectors, including the corrected outlier vectors, back to said predictive search performing means whereby second, and subsequent passes through said predictive search performing means, said detecting means and said correcting means can be undertaken.

For example, the device may further comprise means for adjusting the dimensions of the first and second frames to change the resolution processing level. Preferably, the device further comprises logic means for determining the resolution processing level at the end of a pass, and for applying the block of pixels to means to alter the resolution unless the resolution of the block is at a predetermined level.

In an embodiment the device also comprises means for changing the effective dimensions of the blocks of pixels.

Preferably, the device further comprises logic means for determining the size of the block of pixels at the end of a pass, and for applying the block to said means for changing the effective size of the block unless the size of the block is at a predetermined level.

The use of multi-resolution processing as defined above enables large motion vectors to be captured quickly in early passes. Subsequent passes may use blocks with decreasing effective sizes to enhance the assigned motion vectors.

## Object of the Invention

Object of the present invention is to provide an improved method of estimating motion vectors.

Another object of the present invention is to estimate the blockwise motion vector field between a first frame ($F(t)$) and a second frame ($F(t+T)$) of a sequence of video frames.

Another object of the present invention is to provide a multi-pass method of estimating motion vectors for the interpolation of a video frame.

Another object of the invention is to assign motion vector to each block of pixels by the predictive search step wherein outlier motion vectors in the generated motion vector field are then detected and corrected at the end of each pass.

Another object of the present invention is to correct outlier motion vectors by selecting the motion vector from a candidate set which minimizes the cost function.

Another object of the present invention is to use multi-resolution processing in multi-pass method of estimating motion vectors.

Another object of the present invention is to provide a device for estimating motion vectors for the interpolation of a video frame.

Another object of the present invention is to provide a device which further comprises means for adjusting the dimensions of the first and second frames to change the resolution processing level.

Another object of the present invention is to provide a device which further comprises means for changing the effective dimensions of the blocks of pixels.

## Brief Description of the Drawings

Embodiments of the present invention will hereinafter be described, by way of example, with reference to the accompanying drawings, in which:

**Figure 1**; illustrates a block diagram of a device for estimating motion vectors by a method of the invention;

**Figure 2**; shows a predictive motion vector (PMV) selection pattern;

**Figure 3**; depicts alternating scan orders followed in successive passes of the method; and

**Figure 4;** shows a sub-block motion vector assignment structure.

The reference numbers as used in figures may possess the following meanings;

| | |
|---|---|
| Estimated Motion Vector Field | (100) |
| A First Frame (F(t)) | (101) |
| A Second Frame (F(t+T)) | (102) |
| Resolution adjusting unit | (103) |
| Predictive search unit | (104) |
| Outlier Vector Detection Unit (OD) | (105) |
| Outlier Vector Correction Unit (OC) | (106) |
| Block Size Adaptation Unit (BSA) | (107) |
| Frame Size Adaptation Unit | (108) |
| Logic Means | (109, 110, 111) |
| Motion Vector | (112) |
| Currently Processed Block | (200) |
| Motion Vectors of the Neighbours | (201-208) |
| Neighbouring Blocks of a Current Block | (411-418) |
| Sub-blocks of a Current Block | (401 - 404) |

## Detailed Description of the Invention

As indicated, embodiments of the present invention are to be utilised in methods of interpolating video frames. For example, the frame to be interpolated may be temporally located between first and second frames of a sequence of video frames, or may be a reconstruction of a single frame. When considering an individual object which occurs in successive frames, it is required there be homogeneity between motion vectors within the object in the successive frames, but that there is a sharp transition between the motion vectors of the object and the background, or between the motion vectors of different objects. The methods described herein seek to achieve this homogeneity and the sharp transitions required.

The methods described can be utilized for estimating the forward motion field (DFwd) between a first frame ($F(t)$) and a second frame ($F(t+T)$) of a sequence of video frames. This is done by finding a match on the second frame for every block of pixels defined on the first frame. Likewise, the method can be used to estimate the backward motion field (DBwd) between a first frame ($F(t)$) and a second frame ($F(t+T)$) of a sequence of video frames, by finding a match on the first frame, for every block of pixels defined on the second frame. In addition, the proposed algorithm can be utilized for estimating any bidirectional motion vector field (DBid) between a first frame ($F(t)$) and a second frame ($F(t+T)$) of a sequence of video frames, and which is defined on the intermediate frame ($F(t+\varphi)$), where $0 < \varphi < T$. For each block of pixels defined on the intermediate frame ($F(t+\varphi)$), a first match in the first frame and a second match in the second frame which is located at the same spatio-temporal line with the first match and the particular block of pixels in the intermediate frame, are found for the estimation of the bidirectional motion vector field.

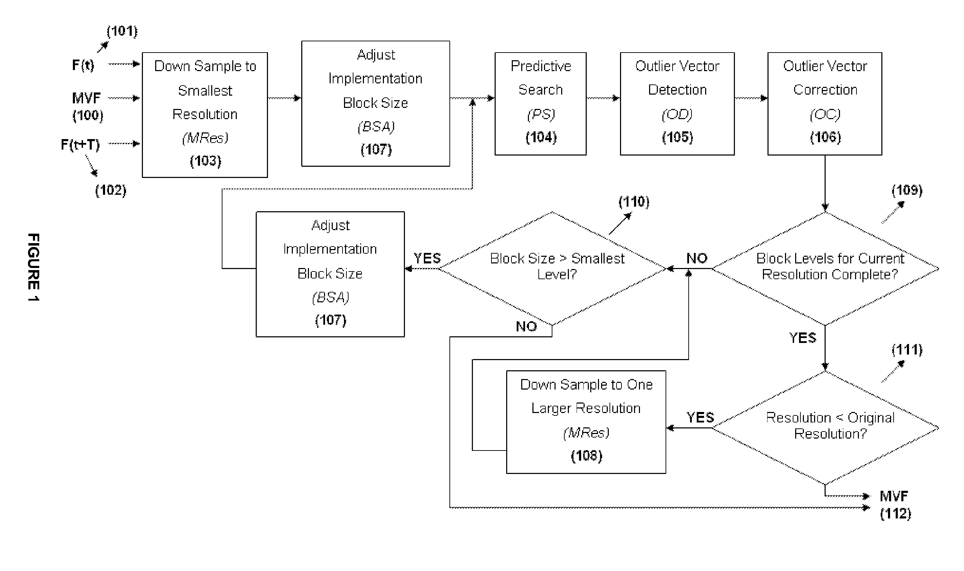

Figure 1 illustrates a block diagram of a device for estimating motion vectors (112) by a method of the invention. A previously estimated motion vector field (100), which is generated between a previous frame ($F(t-T)$) and a first frame ($F(t)$), is applied to a down sampling, resolution adjusting unit (103), together with the first frame ($F(t)$) (101) and the second frame ($F(t+T)$) (102). At shot boundaries of a video signal the input, previously estimated motion vector field (100) might initially comprise zero motion vectors (112) if a screen change/shot boundary detector is available. Otherwise the initial previously estimated motion vector field is appropriately selected to provide temporal continuity. For example, a previous forward, backward, or bidirectional motion vector may be selected. The input frames (101) and (102) are down-sampled to the smallest resolution by the resolution adjusting unit (103).

As described below, methods of the invention are multi-pass methods. The methods are also, preferably, multi-resolution methods and the effective block size is decreased between successive passes. For example, for multi-resolution processing, the implementation block size is adjusted according to the effective block size and a down-sampling factor, by a block size adaptation unit (BSA) (107). The down-scaled frames with adjusted implementation block sizes are then applied to a predictive search unit (PS) (104). The predictive search unit (104) assigns motion vectors (112) to blocks of pixels of one of the frames F($t$), F($t+T$) or F($t+\varphi$), according to the motion estimation being forward, backward or bidirectional.

It will be appreciated that erroneously estimated motion vectors (112) are known as outlier motion vectors (112), and that correctly estimated motion vectors (112) are known as inlier motion vectors (112). The motion vectors (112) which have been estimated by the predictive search unit (104) are then applied to an outlier vector detection unit (OD) (105) so that outlier motion vectors (112) can be detected. The estimated motion vectors (112) are then applied to an outlier vector correction unit (OC) (106) which corrects the detected outlier motion vectors and outputs a corrected motion vector field.

The output of the outlier vector correction unit (106) is applied to logic means (109) which determines the resolution processing level of the blocks at the end of the pass through the predictive search unit (104), the outlier vector detection unit (105) and the vector correction unit (106). If the block resolution is not at a predetermined level, the frames (101) and (102) and the currently estimated and corrected motion vector field are applied back to the predictive search unit (104), such that another pass is operated.

As is indicated in Figure 1, the further passes of the algorithm are operated with adjustments to the necessary implementation block size and to the frame dimensions. The output of the logic means (109), if the effective block size levels for the specific frame dimension resolution are completed, is applied to logic means either (110) or (111). If the effective block size levels for the specific frame dimension resolution are not completed, the output is applied to logic means (110) which determines if the block size is above a predetermined level. If the block size is larger than the predetermined level, the block size is adjusted by a block size adaptation unit (107) whereby the effective block size is reduced for the next pass. If the effective block size levels for the specific frame dimension resolution are not completed, the output of logic means (109) is applied to logic means (111) which determines whether the specific frame dimensions are smaller than the original frame dimensions. If the specific frame dimensions are smaller than the original frame dimensions, the frame dimension resolution is adapted by a frame size adaptation unit (108) which down samples the original frames to the one larger frame dimension resolution than the specific resolution which is currently being processed.

The predictive search method consists of choosing the vector giving minimum error, from a candidate vector set composed of updating a predictive motion vector (112). In other words, the step of correcting outlier motion vectors (112) comprises selecting the motion vector (112) from a candidate set (CScorrect) which minimizes the cost function.

$$\overrightarrow{MV}^{i}\left(\overline{X},t\right) = \arg\min_{\vec{C}\in CS^{i}}\left\{e(\vec{C},\overline{X},t)\right\} \tag{1}$$

In equation (1), $\overrightarrow{MV}^{i}\left(\overline{X},t\right)$ is the motion vector (112) assigned to the block centered at location $\overline{X}=(x,y)$ at the end of $i^{th}$ pass. $CS^{i}$ is the set of candidate vectors and $e(\vec{C},\overline{X},t)$ is the pixelwise error metric. In a preferred embodiment, $e(\vec{C},\overline{X},t)$ is the pixelwise sum of absolute differences which is given in (2).

$$e\left(\vec{C},\overline{X},t\right) = \frac{1}{\left\|B\left(\overline{X}\right)\right\|}\sum_{\overline{x}\in B\left(\overline{X}\right)}\left|I\left(\overline{x},t\right)-I\left(\overline{x}+\vec{C},t+T\right)\right| \tag{2}$$

In equation (2), $\|B(\overline{X})\|$ represents the number of pixels in block $B(X)$, centered at $\overline{X}$. $I(\overline{x},t)$ is the intensity value at spatial location $\overline{x}$ and temporal location $t$.

The candidate set at the $i^{th}$ pass, $CS^{i}$, is formed as in relation (3).

$$CS^{i}\left(\overline{X},t\right) = \left\{\vec{C}\in CS^{\max}:\vec{C} = \overrightarrow{D}^{i}\left(\overline{X}\right)+\vec{U},\vec{U}\in US^{i}\right\} \tag{3}$$

In relation (3), $CS^{\max}$ is the maximum search range of motion vectors (112). $\overrightarrow{D}^{i}\left(\overline{X}\right)$ is the predictive motion vector (PMV) for the block centered at $\overline{X}$, whereas $US^{i}$ represents the set of update vectors in the $i^{th}$ pass.

The properties of the vectors in the update set $US^{i}$ have different impacts on the motion estimation performance. Increasing the number of vectors in the update set and including larger update vectors allows the algorithm to find the motion vectors (112) in large motion regions. On the other hand, increasing the number of vectors and including larger update vectors also increases the risk of divergence in the predictive search procedure which might cause erroneous motion vectors (112). Hence, having a larger update set with the larger block sizes which provide more texture information for more stable motion estimation, and decreasing the update set to reduce the risk of divergence with decreasing the

EP 2 400 740 B1

block size is an appropriate approach.

As set out above, the motion estimation algorithm performed by the device of figure 1 utilizes multi-resolution processing in order to enable fast convergence in regions with large motion. Hence, having a large update set in order to enable fast convergence at the cost of taking the risk of divergence, is not necessary. The update vectors are selected from a small set in the first few passes. As the motion vectors (112) converge to a stable state, the set of update vectors is fixed to a minimum set. The set of update vectors $US^i$ can be viewed in relation (4).

$$US^i = \begin{cases} \left\{ \begin{pmatrix} 0 \\ 0 \end{pmatrix}, \begin{pmatrix} \pm 1 \\ 0 \end{pmatrix}, \begin{pmatrix} 0 \\ \pm 1 \end{pmatrix}, \begin{pmatrix} \pm 2 \\ 0 \end{pmatrix}, \begin{pmatrix} 0 \\ \pm 2 \end{pmatrix} \right\}, i = 1, 2 \\ \left\{ \begin{pmatrix} 0 \\ 0 \end{pmatrix}, \begin{pmatrix} \pm 1 \\ 0 \end{pmatrix}, \begin{pmatrix} 0 \\ \pm 1 \end{pmatrix} \right\}, \qquad\qquad i > 2 \end{cases} \qquad (4)$$

The predictive motion vector $\vec{D}^i\left(\overline{X}\right)$ is taken to be the best vector in terms of the error metric from a set of predictive motion vector candidates, $DS^i(\overline{X})$. This procedure is formulized in (5).

$$\vec{D}^i\left(\overline{X}\right) = \arg \min_{\vec{C} \in DS^i\left(\overline{X}\right)} \left\{ e\left(\vec{C}, \overline{X}, t\right) \right\} \qquad (5)$$

In forming the set of predictive motion vector (PMV) candidates, $DS^i(\overline{X})$, it is important that at least one of the predictive motion vector (PMV) candidates is on the same object with the currently processed block centered at $\overline{X}$.

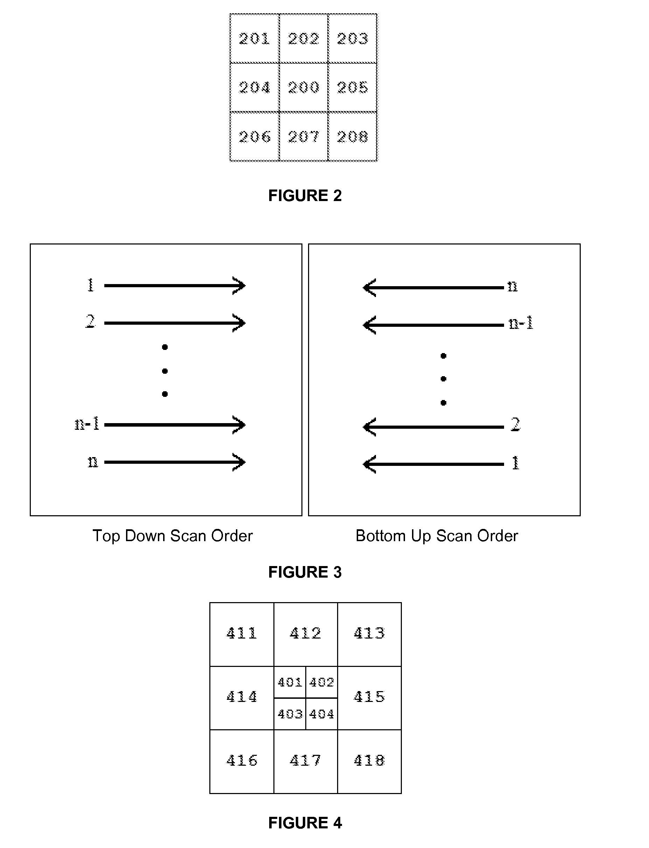

In an embodiment, this is achieved by utilizing the pattern illustrated in figure 2. As shown, motion vectors of the neighbours (201), (203), (206) and (208) are included in the predictive motion vector (PMV) candidate set for the currently processed block (200).

As the motion vectors (112) are determined with the predictive search routine for the current pass ($i^{th}$ pass), an analysis is performed on this motion field in order to detect and correct the erroneously estimated motion vectors (112). The erroneous motion vectors (112) are corrected at the end of each pass in order to prevent the error propagation between passes.

The outlier motion vectors are mostly located in covered and uncovered occlusion regions where proper block matching cannot be performed. Due to lack of good matching properties, the vectors have high matching error values in these regions. In addition, since the neighbouring blocks belonging to the same moving object should obey the same motion, the vectors having low correlation with the neighbouring vectors should also be detected as outlier.

A motion vector (112) is detected as an outlier vector, if at least one of the conditions in (6) and (7) is satisfied.

$$e\left(\vec{C}, \overline{X}, t\right) > thr_{SAD} \qquad (6)$$

$$Number\ of\ Similar\ Vectors < thr_{neighbor} \qquad (7)$$

In conditions (6) and (7), $e(\vec{C}, \overline{X}, t)$ is the pixelwise error metric. In an embodiment, $e(\vec{C}, \overline{X}, t)$ is the pixelwise sum of absolute differences metric which is given in equation (2). The variables $thr_{SAD}$ and $thr_{neighbor}$ are predetermined thresholds.

Two vectors $\overline{X}_1 = (x_1, y_1)$ and $\overline{X}_2 = (x_2, y_2)$ are regarded as similar, if the absolute differences between the x and y components are smaller than a predetermined threshold. This procedure is formalized in relation (8),

$$\overline{X}_1\ and\ \overline{X}_2\ are\ similar\ if \begin{cases} \left|x_1 - x_2\right| < thr_{sim} \\ AND \\ \left|y_1 - y_2\right| < thr_{sim} \end{cases} \qquad (8)$$

8

In relation (8), $thr_{sim}$ is a predetermined threshold. Regarding the relation (8), it can be stated that separate similarity of the vector components are considered rather than the total similarity measure, such as sum of absolute differences of the vector components. This selection is effective for eliminating false similarity decisions.

After the outlier motion vectors (112) in the current pass are detected, they are corrected by selecting the best vector of a candidate set, $CS_{correct}(\overline{X},t)$ in terms of a cost function, $J\left(\vec{C},\overline{X},t\right)$.

$$\overline{MV}(\overline{X},t) = \arg \min_{\vec{C} \in CS_{correct}(\overline{X},t)} \left\{ J(\vec{C},\overline{X},t) \right\} \qquad (9)$$

The candidate set is composed of the vectors in the neighbourhood which are labeled as inlier. The neighbourhood is kept small, so as not to cause any divergence. It may be determined to be the 3x3 neighbourhood. The candidate set is expressed formally in (10).

$$CS_{correct}(\overline{X},t) = \left\{ \vec{C} \in 3x3\, Neighborhood : \vec{C}\, is\, an\, Inlier\, Vector \right\} \qquad (10)$$

Since a motion vector (112) should have a low SAD value together with high spatial correlation with the neighbouring vectors in order to be regarded as inlier, the core structure of the cost function is as follows:

$$J_{core}(\vec{C},\overline{X},t) = e(\vec{C},\overline{X},t) + \lambda \sum_{\vec{V} \in CS_{correct}} \left( \left| C_x - V_x \right| + \left| C_y - V_y \right| \right) \qquad (11)$$

In equation (11), $C_x$, $C_y$, $V_x$ and $V_y$, represent the x and y components of the corresponding vectors and $\lambda$ is a design parameter.

The reliability of a vector labeled as inlier changes with the inlier/outlier statuses of the vectors in its own neighbourhood. An inlier vector having a lesser number of outlier neighbours is more reliable. In addition, the likelihood that any two blocks in a neighbourhood belong to the same moving object increases as the absolute difference between the average intensity values of the blocks decreases. These additional constraints are added to the core cost function $J_{core}(\vec{C},\overline{X},t)$ in (11), forming the complete cost function $J(\vec{C},\overline{X},t)$.

$$J(\vec{C},\overline{X},t) = J_{core}(\vec{C},\overline{X},t) \times \frac{\left| \mu(\overline{X}) - \mu(\overline{X}(\vec{C})) \right|}{255} \times \frac{N_{Outlier}\left(\overline{X}(\vec{C})\right)}{N_{Total}\left(\overline{X}(\vec{C})\right)} \qquad (12)$$

In equation (12), $\overline{X}$ is the center location of the block under process, whereas $\vec{C}$ and $\overline{X}(\vec{C})$ are the candidate vector and the center location of the block of the candidate vector, respectively. The quantity $\mu(\overline{X})$ represents the mean intensity value of the block centered at $\overline{X}$. On the other hand, $N_{Outlier}(\overline{X})$ and $N_{Total}(\overline{X})$ are the number of blocks having outlier vectors in the neighbourhood of the block centered at $\overline{X}$ and the total number of blocks in the neighbourhood, respectively.

The proposed multi-resolution motion estimation algorithm is designed for operating with flexibility in parameter settings. In an embodiment the algorithm is operated with an initial effective block size of 32x32 which is then decreased to an effective block size of $16 \times 16$, and then to $8 \times 8$. The motion vector field is generated with a block size of $4 \times 4$.

In one embodiment, the number of passes for each block size level is set to 1. Hence, there are a total of 4 passes for motion estimation. The first two passes, corresponding to effective block sizes of $32 \times 32$ and $16 \times 16$, are performed with downscaled frames having downscale factors of (4:1)×(4:1) and (2:1)×(2:1), respectively. The implementation block sizes for both levels are 8x8 due to down-sampling. The last two levels, having effective block sizes of $8 \times 8$ and 4x4 are processed with the original frames, with the implementation block sizes of 8×8 and 4×4.

The block size configurations and the parameter values used in one implementation are illustrated in Table 1 and Table 2.

**Table 1 - Block Size Configurations**

| Level | Effective Block Size | Down Scaling Factor | Implementation Block Size |
|---|---|---|---|
| 1 | 32x32 | (4:1)x(4:1) | 8x8 |
| 2 | 16x16 | (2:1)x(2:1) | 8x8 |
| 3 | 8x8 | (1:1)x(1:1) | 8x8 |
| 4 | 4x4 | (1:1)x(1:1) | 4x4 |

**Table 2 - Parameter Settings**

| Parameter Explanation | Parameter Name | Equation Reference | Parameter Value |
|---|---|---|---|
| Pixel-wise SAD Threshold for Outlier Vector Detection | $thr_{SAD}$ | (6) | 8.0 |
| Threshold of Similar Neighbors for Outlier Vector Detection | $thr_{neighbor}$ | (7) | 3 |
| Component-wise Threshold for Vector Similarity | $thr_{sim}$ | (8) | 2 |
| Scaling Factor in Outlier Vector Correction Metric | $\lambda$ | (11) | 1.0 |

The pattern used for predictive motion vector candidates, which is illustrated in Figure 2, is designed to provide opposite sided convergence for preventing possible drawbacks caused by one-dimensional convergence. In addition, alternating scan orders are preferably applied at successive passes to reduce the one-dimensional convergence effect. The alternating scan orders are illustrated in Figure 3.

As explained above, the effective block size may be decreased between successive passes. Since the effective block size is halved, 4 sub-blocks exist in the new motion field corresponding to a single block in the previous motion field. One alternative for filling the extended motion field is the simple copy of the single motion vector (112) to all of the sub-blocks. However, it is also possible to assign the motion vector (112) out of a candidate set to the new sub-blocks to minimize the pixelwise error metric, $e\left(\vec{C}, \overline{X}, t\right)$.

The sub-block motion vector (112) assignment structure is illustrated in Figure 4. The blocks (411, 412, 413, 414, 415, 416, 417 and 418) are the neighbouring blocks of the current block, which is composed of the sub-blocks (401, 402, 403 and 404). The candidate sets of the sub-blocks are given in (13).

$$CS_{401} = \left\{\vec{V}_{411}, \vec{V}_{412}, \vec{V}_{414}, \vec{V}_{400}\right\}$$
$$CS_{402} = \left\{\vec{V}_{412}, \vec{V}_{413}, \vec{V}_{415}, \vec{V}_{400}\right\}$$
$$CS_{403} = \left\{\vec{V}_{414}, \vec{V}_{416}, \vec{V}_{417}, \vec{V}_{400}\right\} \tag{13}$$
$$CS_{404} = \left\{\vec{V}_{415}, \vec{V}_{417}, \vec{V}_{418}, \vec{V}_{400}\right\}$$

In (13), $\vec{V}_{411}, \vec{V}_{412}, \vec{V}_{413}, \vec{V}_{414}, \vec{V}_{415}, \vec{V}_{416}, \vec{V}_{417}, \vec{V}_{418}$ are the motion vectors corresponding to blocks (411, 412, 413, 414, 415, 416, 417 and 418), respectively. The motion vector $\vec{V}_{400}$ is the motion vector of the current block before it is divided into sub-blocks.

As set out above, the methods described aim at multi-resolution processing with the adaptation of the implementation block dimensions. This enables the computations to be made using smaller block sizes whilst producing the impact of a larger block size.

Predictive search is performed for assigning the motion vectors (112) for each block of pixels. The proposed algorithm detects the outlier motion vectors (112) in the assigned motion vector field at the end of each pass. In the last stage, the detected outlier motion vectors (112) are corrected to provide the motion vector field obtained at the end of each pass.

It will be appreciated that variations in, and modifications to, the embodiments described and illustrated may be made within the scope of the accompanying claims.

**Claims**

1.  A multi-pass method of estimating motion vectors (112) for the interpolation of a frame in a sequence of video frames comprising first frames (101) and second frames (102) by finding a match on one of said second frames (102) for every block of pixels defined on one of said first frames (101) or vice versa,
    wherein said frame to be interpolated is temporally located between said one first frame (101) and said one second frame (102),
    the method comprising the steps of:

    - adjusting a block size of said one first frame (101) and said one second frame (102) by down-scaling said one first frame and said one second frame,
    - performing a motion estimation by applying a predictive search to said down-scaled one first and said down-scaled one second frame to assign motion vectors (112) to blocks of pixels of said one first frame (101) or said one second frame (102) according to motion estimation being forward or backward,
    - detecting outlier motion vectors (112) amongst the assigned motion vectors (112),
    - correcting the outlier motion vectors (112), and
    - determining a resolution processing level,
    - repeating the steps of adjusting a block size, performing a motion estimation, detecting outlier motion vectors , correcting the outlier motion vectors, and determining the resolution processing level in second and subsequent passes to prevent error accumulation in the assigned motion vectors (112) if the block size is above a predetermined level, wherein during each of said passes, the block size is decreased by a down-sampling factor and said resolution processing level is changed,

    **characterized in that**
    the step of correcting outlier motion vectors (112) comprises selecting a motion vector from a candidate set (CScorrect) as a candidate motion vector which minimizes a cost function wherein said cost function comprises:

    - a pixelwise match error when the candidate motion vector is applied to a particular block of pixels;
    - total deviation of the candidate motion vector from the other motion vectors in the candidate set (CScorrect);
    - an absolute difference of the mean intensity values of the particular block of pixels and a block of pixels hosting the candidate motion vector; and
    - a ratio of the number of blocks having outlier motion vectors in a neighbourhood of the block hosting the candidate motion vector, and the total number of blocks in the neighbourhood of the block hosting the candidate motion vector;

    wherein the candidate set (CScorrect) for motion vector (112) correction is composed of the inlier motion vectors of blocks in a neighbourhood of the block hosting the outlier motion vector which is corrected.

2.  A method according to claim 1, wherein the step of detecting outlier motion vectors comprises:

    - detecting as outlier motion vectors (112), motion vectors (112) having pixelwise match error above a predetermined threshold.

3.  A method according to any preceeding claim, wherein the step of detecting outlier motion vectors comprises:

    - detecting as outlier motion vectors (112), motion vectors (112) having insufficient consistency with the motion vectors (112) of neighbouring blocks.

**Patentansprüche**

1.  **Multi-Durchlauf-Verfahren** (multi-pass method) zum Abschätzen von Bewegungsvektoren (112) für die Interpolation eines Bildes (frame) in einer Sequenz von Videobildern, mit ersten Bildern (101) und zweiten Bildern (102), durch Auffinden einer Übereinstimmung auf einem der zweiten Bilder (102) jedes auf einem der ersten Bilder (101) definierten Pixelblocks oder vice versa,
wobei das zu interpolierende Bild temporär zwischen dem ersten Bild (101) und dem zweiten Bild (102) liegt, und das Verfahren die Schritte umfasst:

- Einstellen einer Blockgröße des ersten Bildes (101) und des zweiten Bildes (102) durch Herunterskalieren des ersten Bildes und des zweiten Bildes,
- Durchführen einer Bewegungsabschätzung durch Anwenden einer prädiktiven Abfrage des herunterskalierten ersten und des herunterskalierten zweiten Bildes, um Pixelblöcken des ersten Bildes (101) oder des zweiten Bildes (102) Bewegungsvektoren (112) zuzuweisen, entsprechend einer Bewegungsabschätzung als vorwärts oder als rückwärts,
- Detektion von Ausreißer-Bewegungsvektoren (112) innerhalb der zugewiesenen Bewegungsvektoren (112),
- Korrigieren der Ausreißer-Bewegungsvektoren (112), und
- Bestimmen eines Auflösungsverarbeitungspegels,
- Wiederholen der Schritte des Einstellens einer Blockgröße, des Durchführens einer Bewegungsabschätzung, der Detektion von Ausreißer-Bewegungsvektoren, dem Korrigieren der AusreißerBewegungsvektoren, und dem Bestimmen des Auflösungsverarbeitungspegels in zweiten und anschließenden Durchläufen (passes), um eine Fehlerakkumulation in den zugewiesenen Bewegungsvektoren (112) zu verhindern, falls die Blockgröße oberhalb eines vorbestimmten Levels liegt, wobei während jedem der Durchläufe (passes) die Blockgröße durch einen Down-sampling-Faktor reduziert wird und das Auflösungsverarbeitungspegels geändert wird,

**dadurch gekennzeichnet, dass**
der Schritt der Korrektur von Ausreißer-Bewegungsvektoren (112) umfasst:

Auswählen eines Bewegungsvektors aus einem Kandidatensatz (CScorrect) als Kandidaten-Bewegungsvektor, der eine Kostenfunktion minimiert, wobei die Kostenfunktion umfasst:

- einen pixelweisen Übereinstimmungsfehler, wenn der Kandidaten-Bewegungsvektor auf einen spezifischen Pixelblock angewendet wird;
- Gesamtabweichung des Kandidaten-Bewegungsvektors von den anderen Bewegungsvektoren in dem Kandidatensatz (CScorrect);
- eine absolute Differenz der mittleren Intensitätswerte des spezifischen Pixelblocks und einen Pixelblock, der den KandidatenBewegungsvektor beinhaltet oder bereitstellt (hosting); und
- ein Verhältnis der Anzahl der Blöcke mit AusreißerBewegungsvektoren in der Umgebung des Blocks, der den KandidatenBewegungsvektor beinhaltet oder bereitstellt (hosting), und die Gesamtanzahl von Blöcken in der Umgebung des Blocks, der den Kandidaten-Bewegungsvektor beinhaltet oder bereitstellt (hosting);

wobei der Kandidatensatz (CScorrect) zum Korrigieren eines Bewegungsvektors (112) besteht aus, innerhalb eines Schwellwerts liegenden Bewegungsvektoren (inlier motion vectors) von Blöcken in einer Umgebung des Blocks, der den zu korrigierenden AusreißerBewegungsvektoren beinhaltet oder bereitstellt (hosting).

2. Verfahren nach Anspruch 1, wobei der Schritt zur Detektion von Ausreißer-Bewegungsvektoren umfasst:

- Bestimmung von Bewegungsvektoren (112) mit einem pixelweisen Übereinstimmungsfehler oberhalb eines vorbestimmten Schwellwerts als Ausreißer-Bewegungsvektoren (112).

3. Verfahren nach einem der vorstehenden Ansprüche, wobei der Schritt zur Detektion von Ausreißer-Bewegungsvektoren umfasst:

- Bestimmung von Bewegungsvektoren (112) mit unzureichender Übereinstimmung mit den Bewegungsvektoren (112) von umgebenden Blöcken als Ausreißer-Bewegungsvektoren (112).

**Revendications**

1. Procédé à plusieurs passes pour l'estimation de vecteurs de mouvement (112) en vue de l'interpolation d'une trame dans une séquence de trames vidéo, comprenant des premières trames (101) et des secondes trames (102), en trouvant une concordance sur une desdites secondes trames (102) pour chaque bloc de pixels défini sur une desdites premières trames (101) ou vice versa,

ladite trame à interpoler étant située temporellement entre ladite une première trame (101) et ladite une seconde trame (102),

le procédé comprenant les étapes suivantes :

- ajustement d'une taille de bloc de ladite une première trame (101) et de ladite une seconde trame (102) par réduction d'échelle de ladite une première trame et de ladite une seconde trame,
- réalisation d'une estimation de mouvement par application d'une recherche prédictive à ladite première trame à échelle réduite et à ladite seconde trame à échelle réduite pour attribuer des vecteurs de mouvement (112) aux blocs de pixels de ladite une première trame (101) ou de ladite une seconde trame (102) selon que l'estimation de mouvement est vers l'avant ou vers l'arrière,
- détection de vecteurs de mouvement aberrants (112) parmi les vecteurs de mouvement attribués (112),
- correction des vecteurs de mouvement aberrants (112), et
- détermination d'un niveau de traitement de résolution,
- répétition des étapes d'ajustement d'une taille de bloc, de réalisation d'une estimation de mouvement, de détection de vecteurs de mouvement aberrants, de correction des vecteurs de mouvement aberrants et de détermination du niveau de traitement de résolution au cours d'une seconde passe et de passes subséquentes pour éviter une accumulation d'erreurs dans les vecteurs de mouvement attribués (112) si la taille du bloc est au-dessus d'un niveau prédéterminé ; durant chacune desdites passes, la taille du bloc étant diminuée d'un facteur de sous-échantillonnage et ledit niveau de traitement de résolution étant modifié,

**caractérisé en ce que**

l'étape de correction des vecteurs de mouvement aberrants (112) comprend une sélection d'un vecteur de mouvement parmi un ensemble de candidats (CScorrect) en tant que vecteur de mouvement candidat qui rend minimale une fonction de coûts qui comprend :

- une erreur de concordance par pixel lorsque le vecteur de mouvement candidat est appliqué à un bloc particulier de pixels ;
- une déviation totale du vecteur de mouvement candidat par rapport aux autres vecteurs de mouvement dans l'ensemble de candidats (CScorrect) ;
- une différence absolue des valeurs d'intensité moyennes du bloc particulier de pixels et d'un bloc de pixels hébergeant le vecteur de mouvement candidat ; et
- un rapport entre le nombre de blocs ayant des vecteurs de mouvement aberrants dans un voisinage du bloc hébergeant le vecteur de mouvement candidat et le nombre total de blocs dans le voisinage du bloc hébergeant le vecteur de mouvement candidat ;

l'ensemble de candidats (CScorrect) pour la correction des vecteurs de mouvements (112) étant composé des vecteurs de mouvement non aberrants de blocs dans un voisinage du bloc hébergeant le vecteur de mouvement aberrant qui est corrigé.

2. Procédé selon la revendication 1, l'étape de détection des vecteurs de mouvement aberrants comprenant :

- la détection, en tant que vecteurs de mouvement aberrants (112), des vecteurs de mouvement (112) ayant une erreur de concordance par pixel au-dessus d'un seuil prédéterminé.

3. Procédé selon l'une quelconque des revendications précédentes, l'étape de détection de vecteurs de mouvement aberrants comprenant :

- la détection, en tant que vecteurs de mouvement aberrants (112), des vecteurs de mouvement (112) ayant une cohérence insuffisante avec les vecteurs de mouvement (112) de blocs voisins.

**FIGURE 1**

|     |     |     |
| --- | --- | --- |
| 201 | 202 | 203 |
| 204 | 200 | 205 |
| 206 | 207 | 208 |

**FIGURE 2**

Top Down Scan Order     Bottom Up Scan Order

**FIGURE 3**

|     |     |     |
| --- | --- | --- |
| 411 | 412 | 413 |
| 414 | 401 402 / 403 404 | 415 |
| 416 | 417 | 418 |

**FIGURE 4**

REFERENCES CITED IN THE DESCRIPTION

**Non-patent literature cited in the description**

- **MEI HUANG.** *Motion vector processing in compressed video and its applications to motion compensated frame interpolation,* 01 January 2009, 1-46
- **S.C. TAI ; Y.R. CHEN ; Z.B. HUANG ; C.C. WANG.** A Multi-Pass True Motion Estimation Scheme with Motion Vector Propagation for Frame Rate Up Conversion Applications. *IEEE Journal of Display Technol.,* June 2008, vol. 4 (2), 188-197

- **AI-MEI HUANG.** *Motion vector processing in compressed video and its applications to motion compensated frame interpolation,* 01 January 2009
- **SUK-JU KANG et al.** Design and implementation of median filter based adaptive motion vector smoothing for motion compensated frame rate up-conversion. *CONSUMER ELECTRONICS, 2009. ISCE '09. IEEE 13th International Symposium On, IEEE, Piscataway, NJ, USA,* 25 May 2009, 745-748